# EUROPÄISCHE PATENTANMELDUNG

(11) **EP 2 339 364 A2**
(43) Veröffentlichungstag der Anmeldung: **29.06.2011**
(21) Anmeldenummer: 10187972.4
(22) Anmeldetag: 19.10.2010
(51) Int. Cl.: G01S 7/40, G01S 13/86, G01S 13/87, G01S 13/93, G01S 7/497, G01S 17/93, G01S 15/93

(54) **Wechselseitige Azimut-Justage von Kfz-Objektsensoren**

(30) Priorität: 17.12.2009 DE 102009054835
(71) Anmelder: Robert Bosch GmbH, 70442 Stuttgart (DE)
(72) Erfinder: Jordan, Ruediger, 70176 Stuttgart (DE); Reiter, Iris Nadine, 71229 Leonberg (DE)

(57) **Zusammenfassung**

Ein Verfahren zur Bestimmung eines Objektwinkels, insbesondere für ein Fahrerassistenzsystem in einem Kraftfahrzeug, umfasst Schritte des Bestimmens von Richtungswinkeln des Objekts bezüglich zweier Sensoren, des Bestimmens des Objektwinkels auf der Basis der Richtungswinkel, des Bestimmens eines Kreuzdejustagewinkels als Differenz der bestimmten Richtungswinkel, des Bestimmens eines die Gültigkeit des Objektwinkels anzeigenden Validitätssignals auf der Basis des Kreuzdejustagewinkels, und des Kompensierens des Einflusses einer relativen Dejustage der Sensoren auf den bestimmten Objektwinkel auf der Basis des Kreuzdejustagewinkels.

## Beschreibung

### Stand der Technik

Die Erfindung betrifft eine Technik zur Objektwinkelerfassung. Insbesondere betrifft die Erfindung ein Verfahren und eine Vorrichtung zur Bestimmung eines Objektwinkels für ein Fahrerassistenzsystem in einem Kraftfahrzeug.

Kraftfahrzeuge werden zunehmend mit Fahrerassistenzsystemen ausgestattet, die den Fahrer des Kraftfahrzeugs unterstützen und entlasten. Beispiele solcher Assistenzsysteme umfassen ein ACC-System (adaptive cruise control) zur Geschwindigkeitsregelung oder ein PSS-System (predictive safety system) zur vorausschauenden Fahrzeugsteuerung, das beispielsweise ein PBA-System (predictive brake assist) zur vorausschauenden Bremsunterstützung oder ein PEB-System (predictive emergency braking) zur vorausschauenden Bremsaktivierung umfassen kann.

Derartige Fahrerassistenzsysteme erfordern Sensoren, mit deren Hilfe eine Umgebung des Kraftfahrzeugs auf Objekte abgetastet werden kann, die eine Bremsbeeinflussung erfordern könnten. Solche Sensoren können eine Verarbeitung von Messdaten umfassen oder Rohdaten bereitstellen, die an anderer Stelle verarbeitet werden. Für unterschiedliche Entfernungs- bzw. Richtungsbereiche können beispielsweise Radar-, Lidar-, Ultraschall- und optische Sensoren einzeln oder in Kombination miteinander eingesetzt werden.

Bei Verwendung mehrerer Sensoren (auch unterschiedlicher Technologie) ist es möglich, eine Genauigkeit und/oder Integrität der bestimmten Objektposition auf der Basis redundanter Information zu verbessern. DE 101 49 115 A1 zeigt eine Technik zur Überprüfung von mittels mehrerer Sensoren durchgeführten Objektmessungen auf Widerspruchsfreiheit.

Die verwendeten Sensoren sind üblicherweise fest mit dem Kraftfahrzeug verbunden und auf diese Weise gegen eine Dejustage (Verdrehung gegenüber dem Kraftfahrzeug) gesichert. Eine allmähliche, über eine längere Zeit fortschreitende Dejustage eines Sensors gegenüber dem Kraftfahrzeug ist erfahrungsgemäß unwahrscheinlich. Eine Dejustage eines Sensors kann jedoch beispielsweise durch eine verhältnismäßig geringe Einwirkung eines externen Objekts auf das Kraftfahrzeug bzw. dessen Anbauteile stattfinden, etwa durch eine leichte Kollision, wie sie beim Ein- oder Ausparken erfolgen kann. Ist ein Sensor dejustiert, kann eine Genauigkeit der Positionsbestimmung des Objekts beeinträchtigt sein, so dass ein nachgeschaltetes Fahrerassistenzsystem unter Umständen seine Aufgabe nicht zufriedenstellend oder gar nicht erfüllen kann.

Es sind Techniken bekannt, eine Dejustage eines Sensors an einem Kraftfahrzeug zu erkennen und zu kompensieren. Viele dieser Techniken benötigen eine ausgedehnte Lernphase, um eine eingetretene Dejustage eines Sensors zuverlässig zu erkennen.

Der Erfindung liegt daher die Aufgabe zu Grunde, eine verbesserte Technik zur Erkennung und gegebenenfalls Kompensation einer Dejustage eines solchen Sensors anzugeben. Diese Aufgabe wird gelöst durch ein Verfahren mit den Merkmalen des Anspruchs 1 und eine Vorrichtung mit den Merkmalen des Anspruchs 9.

### Offenbarung der Erfindung

Ein erster Aspekt der Erfindung umfasst ein Verfahren zur Bestimmung eines Objektwinkels, insbesondere für ein Fahrerassistenzsystem in einem Kraftfahrzeug, die Schritte des Bestimmens von Richtungswinkeln des Objekts bezüglich zweier Sensoren, des Bestimmens des Objektwinkels auf der Basis der Richtungswinkel, des Bestimmens eines Kreuzdejustagewinkels als Differenz der bestimmten Richtungswinkel, des Bestimmens eines die Gültigkeit des Objektwinkels anzeigenden Validitätssignals auf der Basis des Kreuzdejustagewinkels und des Kompensierens des Einflusses einer relativen Dejustage der Sensoren auf den bestimmten Objektwinkel auf der Basis des Kreuzdejustagewinkels. Der Objektwinkel ist dabei der Winkel, unter dem das Objekt in einem gemeinsamen Referenzsystem beider Sensoren erscheint. Die Sensoren können an einem Kraftfahrzeug angebracht sein und das Referenzsystem kann bezüglich des Kraftfahrzeugs definiert sein.

Auf der Basis des Kreuzdejustagewinkels kann sowohl die Erkennung einer vorliegenden Dejustage als auch deren Kompensation verbessert werden. Insbesondere erlaubt es der Kreuzdejustagewinkel, ein Vorliegen einer Dejustage unabhängig von deren Kompensation schnell und sicher zu bestimmen. Zur Bestimmung einer relativen Dejustage können Messungen sowohl an einem unbeweglichen als auch an einem beweglichen Objekt, wie einem vorausfahrenden Kraftfahrzeug, verwendet werden. Das Kompensieren kann direkt auf der Basis des Kreuzdejustagewinkels erfolgen, beispielsweise in Form einer Kompensation des Objektwinkels um den Kreuzdejustagewinkel durch eine Winkeladdition. Die Kompensation kann auch indirekt auf dem bestimmten Kreuzdejustagewinkel basieren, beispielsweise indem ein bekanntes Kompensationsverfahren eingeleitet wird, oder indem Parameter eines bekannten Kompensationsverfahrens gezielt verändert werden. Mittels des Validitätssignals kann das nachgeschaltete System deaktiviert werden, bis die Dejustage-Kompensation in ausreichender Qualität erfolgt ist. Dabei wird zunächst nur eine relative Dejustage bestimmt, also die Verdrehung eines Sensors gegenüber dem anderen. Im weiteren Verlauf der vorgestellten Technik kann auch eine gleichsinnige Verdrehung beider Sensoren kompensiert werden.

Die Sensoren können voneinander beabstandet sein und zur Bestimmung der Richtungswinkel können die von den Sensoren erfassten Richtungswinkel in ein gemeinsames Bezugssystem transponiert werden. Aus geometrischen Gründen ist es allgemein wünschenswert, eine Basislinie zwischen den Sensoren quer zu einer Bewegungsrichtung eines Bezugssystems (eines Kraftfahrzeugs) zu maximieren, so dass die Sensoren an einem Kraftfahrzeug häufig vorne links und vorne rechts angebracht sind. Um die von den Sensoren bestimmten Richtungswinkel miteinander vergleichen zu können, kann ein Ursprungspunkt eines gemeinsamen Bezugssystems (Koordinatensystems) beispielsweise auf der die Sensoren verbindenden Basislinie auf der Mittelachse des Kraftfahrzeugs definiert sein. Das Transponieren erfolgt in Kenntnis der Position der Sensoren bezüglich des gemeinsamen Bezugssystems und kann beispielsweise mittels Matrizenoperationen effizient durchgeführt werden.

Das Validitätssignal kann mittels eines Histogrammfilters bestimmt werden. Der Histogrammfilter klassifiziert eintreffende Kreuzdejustagewinkel in Wertebereiche und verwaltet Zählerstände von den Wertebereichen zugeordneten Zählfächern. Anhand unterschiedlicher beobachtbarer Größen am Histogrammfilter kann das Validitätssignal bestimmt werden. Dabei erfordert ein Filtern mittels Histogrammfilter keine zeitlich beabstandeten Messungen, sondern die Filtergeschwindigkeit ist hauptsächlich von einer Messhäufigkeit abhängig, so dass das Bestimmen schnell und zuverlässig ausgeführt sein kann. Das Bestimmen des Validitätssignals kann ein Vergleichen mit einem vorbestimmten Schwellenwert umfassen.

Das Validitätssignal kann auf der Basis des am höchsten gefüllten Zählfachs des Histogrammfilters, eines Wechsels des am höchsten gefüllten Zählfachs oder einer Änderungsrate des Füllstandes eines der Zählfächer bestimmt werden. Das Bilden des Validitätssignals kann auch eine Kombination dieser Größen umfassen. Weitere Beobachtungen am Histogrammfilter können ebenfalls mit einfließen, beispielsweise ein Füllgrad des gesamten Histogrammfilters, um ein Erzeugen eines fehlerhaften Validitätssignals in einer Anfangsphase des Verfahrens zu vermeiden. Des weiteren kann auch die Verteilung der Befüllung aller Zählfächer des Histogrammfilters zur Bildung des Validitätssignals ausgewertet werden.

Das Validitätssignal kann auch mittels eines Tiefpassfilters bestimmt werden. Der Tiefpassfilter kann beispielsweise einen Ringspeicher umfassen, mit dessen Hilfe ein gleitender Durchschnitt einer vorbestimmten Anzahl zurückliegender Kreuzdejustagewinkel bestimmt wird.

Auf der Basis von Objektwinkeln desselben Objekts an unterschiedlichen Positionen zum Bezugssystem der Sensoren kann ein Kompensationswinkel bestimmt werden. Das Objekt kann beispielsweise eine Fahrbahnmarkierung oder ein Straßenschild sein, dessen Richtungswinkel in unterschiedlichen Abständen zum Kraftfahrzeug bestimmt werden. Anhand der Veränderung der bestimmten Richtungswinkel kann ein Kompensationswinkel bestimmt werden, der entweder auf einen Richtungswinkel eines Sensors oder auf den auf der Basis der Werte beider Sensoren bestimmten Objektwinkel bezogen ist. Diese Vorgehensweise kann eine Erkennung und/oder Kompensation einer Dejustage eines Sensors auf der Basis des Kreuzdejustagewinkels ergänzen oder unterstützen.

Nach der Kompensation kann eine weitere Verarbeitung der bestimmten Richtungswinkel so erfolgen, als läge keine Dejustage vor.

Der Objektwinkel kann als Mittelwert zwischen den transponierten Richtungswinkeln bestimmt werden. Bei einer Dejustage nur eines der Sensoren fließt der Dejustagewinkel so nur zur Hälfte in den bestimmten Objektwinkel ein, wodurch der bestimmte Objektwinkel etwa für ein nachgeschaltetes Fahrerassistenzsystem verwendbar bleiben kann.

Nach einem zweiten Aspekt umfasst eine Vorrichtung zur Bestimmung eines Objektwinkels, insbesondere für ein Fahrerassistenzsystem in einem Kraftfahrzeug, zwei Sensoren zum Bestimmen von Richtungswinkeln des Objekts, eine Verarbeitungseinrichtung zum Bestimmen des Objektwinkels auf der Basis der bestimmten Richtungswinkel, eine Subtraktionseinrichtung zum Bestimmen eines Kreuzdejustagewinkels aus den bestimmten Richtungswinkeln, einen Verifizierer zum Bestimmen eines die Gültigkeit des Objektwinkels anzeigenden Validitätssignals auf der Basis des Kreuzdejustagewinkels und einen Kompensator zum Kompensieren des Einflusses einer relativen Dejustage der Sensoren auf den bestimmten Objektwinkel auf der Basis des Kreuzdejustagewinkels.

Die Vorrichtung kann beispielsweise Bestandteil eines mit einer Verarbeitungseinrichtung integrierten Radarsensors sein, etwa eines Fernradars (LRR, long range radar). Dieser kann einen oder mehrere Sensoren umfassen.

Die Sensoren können voneinander beabstandet sein und die Vorrichtung kann eine Transponiereinrichtung zum Transponieren von durch die Sensoren erfasste Richtungswinkel in ein gemeinsames Bezugssystem umfassen. Dadurch wird eine Weiterverarbeitung der transponierten Richtungswinkel durch andere Systeme erleichtert.

Der Verifizierer der Vorrichtung kann ein oben beschriebenes Histogrammfilter umfassen.

Im Folgenden wird die vorgeschlagene Lösung anhand der beigefügten Zeichnungen genauer beschrieben, in denen:
- Figur 1 ein Blockschaltbild einer Vorrichtung zur Bestimmung eines Objektwinkels;
- Figur 2 graphische Darstellungen einer Dejustage-Kompensation, wie sie von der Verarbeitungseinrichtung aus Figur 1 durchgeführt werden kann;
- Figuren 3a und 3b Veranschaulichungen eines Histogrammfilters zum Einsatz in der Vorrichtung aus Figur 1, und
- Figur 4 ein Ablaufdiagramm eines Verfahrens zur Bestimmung eines Objektwinkels
darstellen.

Im Folgenden verwendete Bezeichnungen für unterschiedliche Winkel umfassen:

| | |
|---|---|
| Richtungswinkel | von einem Sensor L, R bestimmter Winkel zum Objekt |
| Objektwinkel | der tatsächliche Winkel, unter dem ein Objekt in einem |
| | gemeinsamen Koordinatensystem erscheint |
| Dejustagewinkel | Winkel, um den einer der Sensoren L, R gegenüber dem |
| | gemeinsamen Koordinatensystem verdreht ist |
| Objekthypothese | der vom Gesamtsystem bestimmte Winkel des Objekts im |
| | gemeinsamen Koordinatensystem |
| Kreuzdejustagewinkel | Differenz transponierter Richtungswinkel |
| Systemwinkel | Differenz zwischen dem aus den Richtungswinkeln der |
| | Sensoren L, R gebildeten Koordinatensystem und dem |
| | Koordinatensystem des Fahrzeugs |
| Kompensationswinkel | bestimmte Näherung an einen Dejustagewinkel. |

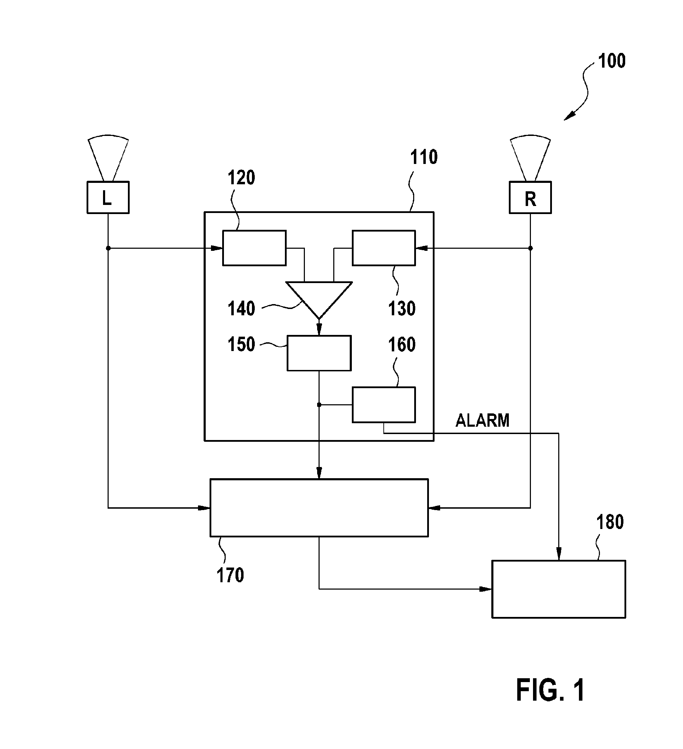

Figur 1 zeigt ein Blockschaltbild einer Vorrichtung 100 zur Bestimmung eines Objektwinkels mit einem nachgeschalteten Fahrerassistenzsystem 180. Zwei Sensoren L und R bestimmen jeweils einen Richtungswinkel eines Objekts (nicht dargestellt), das sich in einem gemeinsamen Messbereich der Sensoren L und R befindet. Die Sensoren L und R sind voneinander beabstandet, so dass im Allgemeinen die Richtungswinkel der Sensoren L und R bezüglich desselben Objekts unterschiedlich sind. Die Sensoren L und R können darüber hinaus eine Entfernungsmessung zu dem Objekt bereitstellen. Die Sensoren L und R sind mit der Justage-Einrichtung 110 verbunden, um dieser Messwerte bereitzustellen.

Die Justage-Einrichtung 110 umfasst eine erste Transponiereinrichtung 120 und eine zweite Transponiereinrichtung 130, die mit einer Subtraktionseinrichtung 140 verbunden ist, ferner ein Filter 150 und einen mit dem Filter verbundenen Vergleicher 160. Die Transponiereinrichtungen 120 und 130 führen jeweils eine Transformation der bestimmten Richtungswinkel durch, indem sie den bestimmten Richtungswinkel in ein gemeinsames Koordinatensystem umsetzen und so Messwerte unterschiedlicher Sensoren L, R miteinander vergleichbar machen. Die Subtraktionseinrichtung 140 bildet aus den transponierten Messwerten durch Subtraktion einen Kreuzdejustagewinkel, den sie dem Filter 150 bereitstellt.

Der Filter 150 kann ein Histogrammfilter oder ein Tiefpass sein. Der Kreuzdejustagewinkel gibt an, um welchen Winkelbetrag die Sensoren L und R gegenüber einander verdreht bzw. dejustiert sind. Im Filter 150 wird der Kreuzdejustagewinkel gegen Rauschen, Fehlmessungen und andere Störeinflüsse unempfindlich gemacht. Der Filter 150 kann derart gestaltet sein, dass der Kreuzdejustagewinkel eine relative Dejustage der Sensoren L und R bereits sehr schnell nach dem Eintreten der Dejustage widerspiegelt. Beispielsweise kann eine Zeit, die zwischen einer Dejustage eines der Sensoren L und R und einer entsprechenden Änderung des Validitätssignals vergeht, im Wesentlichen von einer Messhäufigkeit der Sensoren L und R abhängig sein und nicht von einem zeitlichen Abstand der Messungen oder einer Änderung der geometrischen Verhältnisse zwischen dem Objekt und den Sensoren zwischen Messungen.

Der Vergleicher 160 kontrolliert einen oder mehrere Parameter des Filters 150 und gibt ein Fehlersignal ("ALARM") aus, wenn der bzw. die Parameter auf einen Kreuzdejustagewinkel hinweisen, der einen vorbestimmten Schwellenwert übersteigt. Im Fall eines Histogrammfilters für den Filter 150 kann dieser Parameter beispielsweise das am höchsten gefüllte Zählfach des Histogrammfilters oder dasjenige mit der stärksten Zuwachsrate sein. Auf der Basis des Fehlersignals kann beispielsweise ein der Vorrichtung 100 nachgeschaltetes Fahrerassistenzsystem 180 deaktiviert werden, solange eine Integrität der auf der Basis der Sensoren L und R erfassten Objektwinkel nicht gewährleistet ist. Alternativ oder zusätzlich kann das Fehlersignal des Vergleichers 160 in Form einer akustischen oder optischen Warnung an einen Fahrer des Kraftfahrzeugs oder in Form eines Eintrags in einen Fehlerspeicher ausgegeben werden (nicht gezeigt).

Die Verarbeitungseinrichtung 170 bestimmt auf der Basis der Messungen der Sensoren L und R und des Kreuzdejustagewinkels der Justage-Einrichtung 110 eine Objekthypothese, die sie dem Fahrerassistenzsystem 180 bereitstellt. Die Verarbeitungseinrichtung 170 kann dazu eingerichtet sein, eine relative Dejustage eines Sensors L oder R, auf welche die Kreuzdejustage hinweist, zu kompensieren, indem sie Kompensationswinkel für die Sensoren L und R bestimmt. Die von den Sensoren L, R bestimmten Richtungswinkel werden dann mittels der Verarbeitungseinrichtung 170 jeweils um den Kompensationswinkel korrigiert. Der Kompensationswinkel jedes Sensors L, R entspricht der Hälfte des Kreuzdejustagewinkels plus dem Systemwinkel, jedoch weisen die Kompensationswinkel für die beiden Sensoren L, R unterschiedliche Vorzeichen auf.

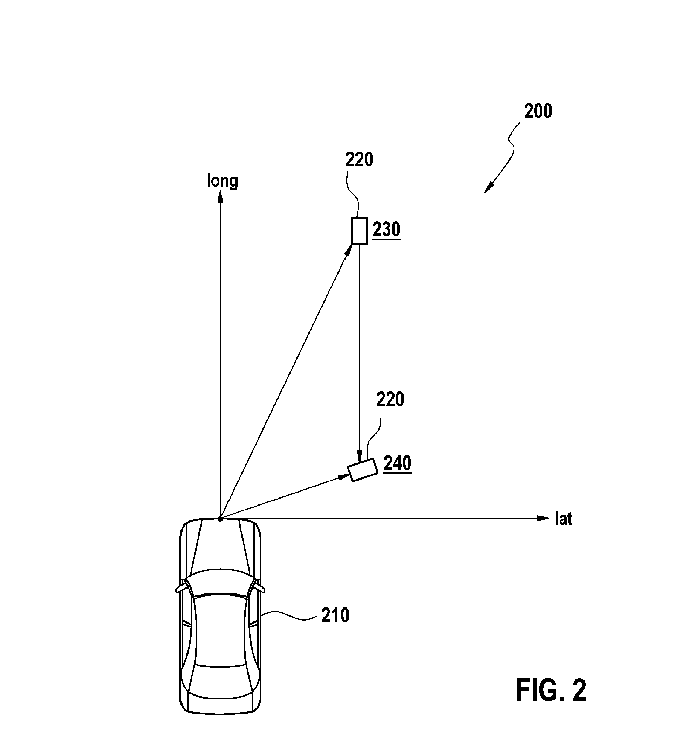

Figur 2 zeigt eine graphische Veranschaulichung 200 einer Dejustage-Kompensation für die Verarbeitungseinrichtung 170 aus Figur 1. Eine Technik für eine Kompensation statischer Fehler dieser Art ist in DE 102 15 673 A1 beschrieben.

An einem Kraftfahrzeug 210 ist ein gemeinsames Koordinatensystem (lat, long) definiert. Der Ursprung des Koordinatensystems befindet sich auf der Längsachse des Kraftfahrzeugs 210 an dessen vorderem Ende. Die Längsachse (long) des Koordinatensystems weist in Fahrtrichtung nach vorne, die Querachse (lat) steht auf der Längsachse senkrecht und weist nach rechts. Ein Objekt 220 befindet sich bezüglich des Kraftfahrzeugs 210 zunächst an einer ersten Position 230 und später in einer zweiten Position 240. Dies ist gleichbedeutend mit einem ortsfesten Objekt 220, beispielsweise einem Verkehrsschild oder einem Fahrbahn-Begrenzungspfosten, bezüglich dem sich das Kraftfahrzeug 210 bewegt.

Anhand einer Kenntnis der Bewegung des Kraftfahrzeugs 210 kann der Abstand des Objekts 220 entlang der Längsachse (long) zwischen den Positionen 230 und 240 bestimmt werden. Zum Richtungswinkel, der für die erste Position 230 bestimmt wurde, kann ein aufgrund der Bewegung ein Richtungswinkel für die zweite Position 240 vorhergesagt werden. Stimmt dieser vorhergesagte Richtungswinkel nicht mit dem für die zweite Position 240 bestimmten Richtungswinkel überein, so liegt entweder ein bewegliches Objekt 220 vor oder ein Sensor, mittels dem der Richtungswinkel bestimmt wurde, ist gegenüber dem Kraftfahrzeug 210 dejustiert (verdreht). Aus dem Ausmaß der mangelnden Übereinstimmung kann ein Kompensationswinkel bestimmt werden, der zusammen mit dem bestimmten Objektwinkel den tatsächlichen Objektwinkel ergibt.

Im Fall eines Systems mit mehreren Sensoren beziehen sich obige Ausführungen auf die Bestimmungen des gesamten Systems.

Die skizzierte Dejustage-Kompensation setzt voraus, dass sich das Kraftfahrzeug 210 in einer bekannten Weise bewegt und dass ein ortsfestes Objekt 220 für die Messungen zur Verfügung steht. Da die Positionen 230 und 240 einen gewissen Abstand zueinander entlang der Längsachse aufweisen müssen, um die beschriebene Dejustagewinkelbestimmungdurchführen zu können, kann es bei einer langsamen Bewegungsgeschwindigkeit des Kraftfahrzeugs 210 erforderlich sein, zeitlich weit auseinander liegende Messungen auszuwerten, wodurch der zu bestimmende Dejustagewinkel lange gar nicht oder nicht genau bestimmt werden kann. Während dieser Zeitdauer ist unter Umständen nicht bekannt, ob überhaupt eine Dejustage vorliegt und ob diese einen tolerierbaren Schwellenwert übersteigt.

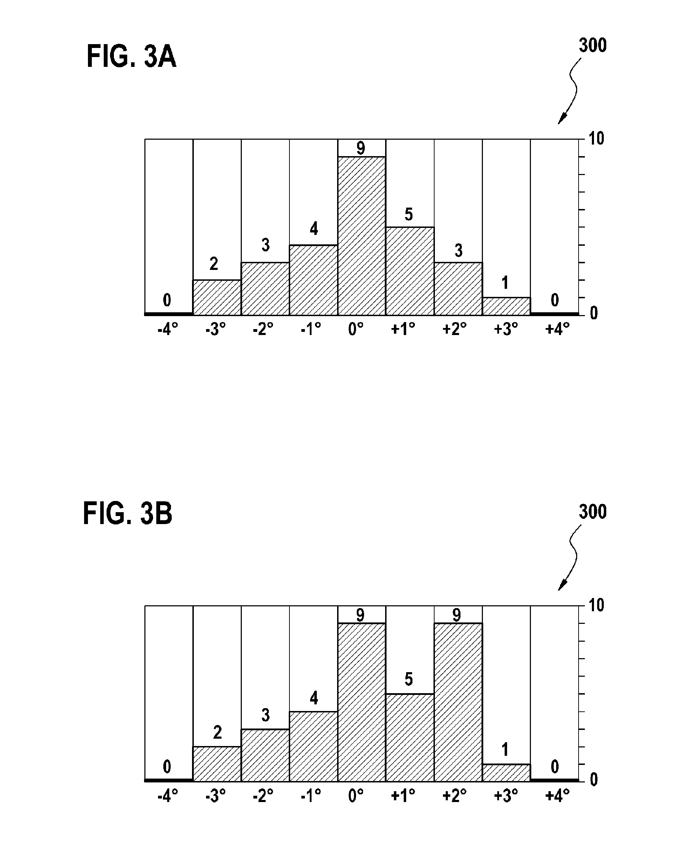

Figuren 3a und 3b zeigen Veranschaulichungen eines Histogrammfilters 300 zum Einsatz als Filter 150 in der Vorrichtung 100 aus Figur 1. Der Histogrammfilter 300 umfasst neun Zählfächer ("bins"), die mit unterschiedlichen Füllständen zwischen 0 und 10 (graphisch durch einen Füllstand dargestellt) gezeigt sind. Winkelangaben unterhalb der Zählfächer bezeichnen Mitten von Bereichen, in die Winkelangaben fallen, die in dem betreffenden Zählfach gezählt werden. Die Aufteilung der Zählfächer und der maximale Zählerstand in dieser Figur sind rein veranschaulichend.

Von der Subtraktionseinrichtung 140 in Figur 1 eintreffende Kreuzdejustagewinkel werden im Histogrammfilter 300 demjenigen Zählfach zugeordnet, dessen Winkelangabe den geringsten Abstand zum Kreuzdejustagewinkel hat. Ein Zählerstand in dem betreffenden Zählfach wird daraufhin um 1 erhöht. In einer weiteren Ausführungsform kann auch das betreffende Zählfach um 2 erhöht werden und die benachbarten Zählfächer jeweils um 1, um Rauschen in den Messwerten und Messungenauigkeiten zu berücksichtigen. Ist eines der Zählfächer voll, im dargestellten Beispiel beim Zählerstand 10, so werden nach dem Inkrementieren die Zählerstände aller Zählfächer mit positivem Zählerstand um 1 verringert. Es kann beispielsweise anhand des am höchsten gefüllten Zählfachs relativ schnell bestimmt werden, in welchem Winkelbereich die meisten der eintreffenden Kreuzdejustagewinkel liegen. Weitere Betrachtungen, etwa einer Standardabweichung der Kreuzdejustagewinkel in den Zählfächern, sind ebenfalls leicht möglich und insbesondere einer digitalen Auswertung gut zugänglich.

In Figur 3a ist eine exemplarische Momentaufnahme des Histogrammfilters 300 im Betrieb der Vorrichtung 100 aus Figur 1 ohne Dejustage der Sensoren L und R dargestellt. Der bestimmte Kreuzdejustagewinkel als Winkeldifferenz zwischen den transponierten Richtungswinkeln liegt mit überwiegender Häufigkeit im Bereich um 0°. Ein großer Unterschied zwischen dem am höchsten und dem am zweithöchsten gefüllten Zählfach (9 bei "0°" gegenüber 5 bei "+1°") weist auf vergleichsweise geringe Störungen bei den Messungen und damit auf eine hohe Wahrscheinlichkeit hin, dass eine relative Dejustage der Sensoren L und R von 0° korrekt ist.

In Figur 3b ist eine Momentaufnahme des Histogrammfilters 300 aus Figur 3a etwas später, kurz nach einem Eintreten einer Dejustage eines der Sensoren L, R um +2° dargestellt (vgl. Figur 2). Die vergangenen 6 Messungen lieferten jeweils eine Winkeldifferenz von +2°, so dass das Zählfach mit der Bezeichnung "+2°" den Zählerstand 9 erreicht hat, und alle anderen Zählfächer ihre Werte aus Figur 3a beibehalten haben.

Die eingetretene relative Dejustage kann nun anhand verschiedener Beobachtungen detektiert werden. Beispielsweise weisen zwei gleichzeitig einen hohen Zählerstand erreichende Zählfächer (hier: "0°" und "+2°") auf eine kürzlich eingetretene relative Dejustage hin, insbesondere dann, wenn die Zählfächer nicht benachbart sind. Ein weiterer Hinweis auf eine eingetretene Dejustage liegt vor, wenn sich das Zählfach mit dem höchsten Zählerstand ändert, insbesondere bei einer abrupten Änderung. Auch kann eine Änderungsgeschwindigkeit des Füllstandes der Zählfächer verwendet werden, um einen sich schnell ändernden Zählerstand zu detektieren, was auf eine kürzlich eingetretene Dejustage hinweisen kann. Ebenfalls kann eine hohe Änderungsgeschwindigkeit des aus dem Histogrammfilter bestimmten Kreuzdejustagewinkels auf eine kürzlich eingetretene Dejustage hinweisen. Der Unterschied der Füllstände der beiden am höchsten gefüllten Zählfächer gegenüber einem anderen Zählfach kann ebenfalls auf eine eingetretene relative Dejustage eines der Sensoren L und R hinweisen. Allgemein ausgedrückt kann eine hohe Varianz bzw. Standardabweichung der Füllstände auf eine relative Dejustage der Sensoren L, R hinweisen. An anderer Stelle (Schritte 415, 420) kann eine mangelnde Validität bestimmt werden, wenn der Kompensationswinkel ein vorbestimmtes Maß überschreitet. Auf der Basis einer oder einer Kombination mehrerer der genannten Heuristiken wird das Validitätssignal gebildet. Dies kann einen Vergleich mit einem zuvor bestimmten Schwellenwert umfassen. Das Validitätssignal entspricht einer Negation des ALARM-Signals in Figur 1, da eine vorhandene Validität der Absenz eines Alarms entspricht und umgekehrt.

Der Kreuzdejustagewinkel kann als der Winkel, der dem Zählfach mit dem höchsten Zählerstand zugeordnet ist, aus dem Histogrammfilter 300 abgelesen werden. Zur Bestimmung des Kreuzdejustagewinkels können auch die Zählerstände benachbarter Zählfächer berücksichtigt werden. Es können unmittelbar benachbarte Zählfächer oder zusätzlich auch weiter entfernte Zählfächer betrachtet werden, vorzugsweise die gleiche Anzahl Zählfächer in aufsteigender und absteigender Richtung, z.B. ±1 oder ±2 Zählfächer. Beispielsweise kann als Kreuzdejustagewinkel ein Mittelwert aus den Winkeln der betrachteten Zählfächer gebildet werden, wobei die Winkel zuvor mit den Quadraten der ihnen über das Zählfach zugeordneten Zählerstände gewichtet werden können.

Der Histogrammfilter 300 ermöglicht eine Bestimmung einer relativen Dejustage der Sensoren L und R schnell und mit hoher Zuverlässigkeit. Alternativ zum Histogrammfilter 300 kann auch ein Tiefpassfilter verwendet werden. Ein Validitätssignal kann beispielsweise auf der Basis zweier Tiefpassfilter mit unterschiedlichen Zeitkonstanten bestimmt werden. Unterscheiden sich die von beiden Tiefpassfiltern bereitgestellten Werte um mehr als ein vorbestimmtes Maß, so weist dies auf eine relative Dejustage hin und das Validitätssignal bzw. das Alarmsignal wird entsprechend gesetzt.

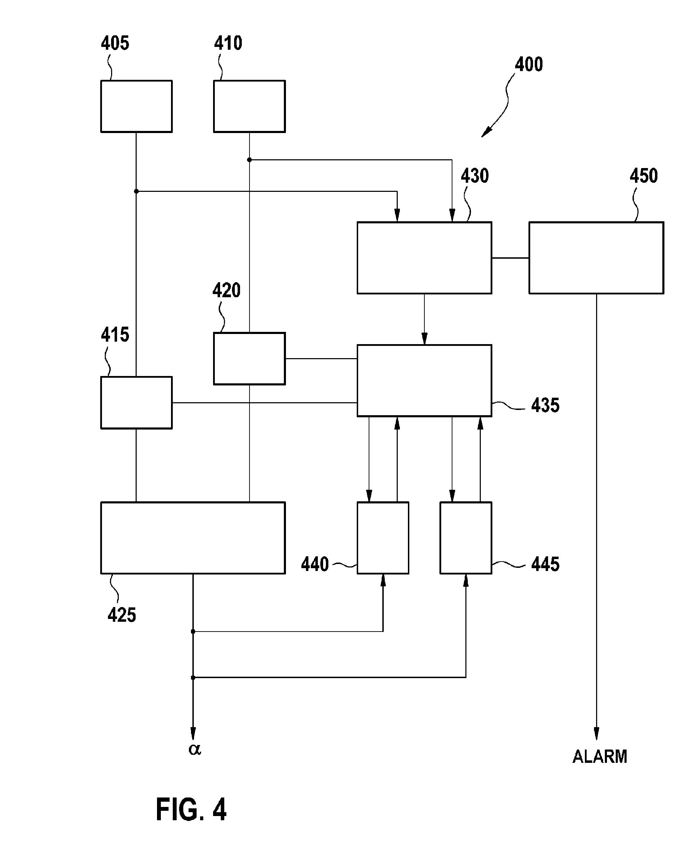

Figur 4 zeigt ein Ablaufdiagramm 400 eines Verfahrens zur Bestimmung eines Objektwinkels mittels der Vorrichtung 100 aus Figur 1. In Schritten 405 und 410 werden Richtungswinkel des Objekts 220 mittels der Sensoren L und R in Figur 1 bestimmt. In Schritten 415 bzw. 420 werden diese Richtungswinkel mittels Kompensationswinkeln korrigiert, die auf der Basis eines zurückliegenden Durchlaufs des Verfahrens 400 bestimmt wurden. Liegen noch keine Kompensationswinkel vor, so können die Kompensationswinkel als 0° angenommen werden. In einem anschließenden Schritt 425 wird auf der Basis der kompensierten Richtungswinkel eine Objekthypothese α aufgestellt, die den Winkel zum Objekt repräsentiert, den das Verfahren 400 bzw. die Vorrichtung 100 schließlich bereitstellt. Im Anschluss daran kann auf der Basis der Objekthypothese eine Position des Objekts bestimmt werden. Schritt 425 kann ein Transponieren der eintreffenden kompensierten Richtungswinkel in ein gemeinsames Koordinatensystem beinhalten.

In einem Schritt 430 wird auf der Basis der in den Schritten 405 und 410 erfassten Richtungswinkel durch Subtraktion ein Kreuzdejustagewinkel bestimmt. In Schritten 440 und 445 werden Systemwinkel für die Sensoren L bzw. R bestimmt. In einem Schritt 435 werden auf der Basis des Kreuzdejustagewinkels und der Systemwinkeln Kompensationswinkel für die Schritte 415 und 420 bestimmt.

In Schritt 435 wird zunächst der halbe Kreuzdejustagewinkel mit unterschiedlichen Vorzeichen auf die kompensierten Richtungswinkel der Sensoren L und R addiert. Die Vorzeichen sind dabei derart verteilt, dass jeder Richtungswinkel auf den anderen Richtungswinkel zu verändert wird. Die dadurch entstehenden teilkompensierten Richtungswinkel werden in den Schritten 440 und 445 für die Sensoren L und R getrennt jeweils dem Lernalgorithmus unterzogen, der oben mit Bezug auf Figur 2 beschrieben wurde. Der Lernalgorithmus bestimmt auf der Basis von Messungen des selben Objekts in unterschiedlichen Positionen jeweils einen Systemwinkel für einen der Sensoren L, R. Der Systemwinkel gibt an, um welchen Winkel der teilkompensierte Richtungswinkel korrigiert werden muss, um eine vollständige Kompensation zu erreichen.

Mit anderen Worten wird mittels des pauschalen Kompensierens der Richtungswinkel der Sensoren L, R jeweils um den halben Kreuzdejustagewinkel eine schnelle Teilkompensation der relativen Dejustage durchgeführt, die durch eine langsame aber genauere und insbesondere sensorindividuelle Kompensation durch den Lernalgorithmus komplettiert wird. So lange vom Lernalgorithmus in den Schritten 440, 445 noch kein Systemwinkel bereitgestellt ist, kann eine relative Dejustage zumindest teilweise kompensiert werden. Außerdem kann die relative Dejustage im Rahmen der Bestimmung des Kreuzdejustagewinkels schnell und sicher erkannt werden.

In einem veranschaulichenden Beispiel beträgt eine Dejustage des Sensors L +3° und eine Dejustage des Sensors R -1°. Die folgende Tabelle gibt Kennwerte des Verfahrens 400 bis zur vollständigen Kompensation der Dejustagen bzw. bis zur vollständigen Bestimmung der Kompensationswinkel an. Der Unterschied der Dejustagewinkel der Sensoren L und R entspricht dem Unterschied der Richtungswinkel, hat allerdings unterschiedliches Vorzeichen.

| Winkel | Sensor L | Sensor R |
|---|---|---|
| Objektwinkel | -2° | |
| Dejustagewinkel | +3° | -1° |
| Richtungswinkel | -5° | -1° |
| Kreuzdejustagewinkel (absolut) | -4° | |
| Kompensation um ½ Kreuzdejustagewinkel | +2° | -2° |
| teilkompensierter Richtungswinkel | -3° | -3° |
| Systemwinkel | +1° | +1° |
| Kompensationswinkel | +3° | -1° |
| vollkompensierter Richtungswinkel | -2° | -2° |

Bei der Bestimmung des teilkompensierten Richtungswinkels, des Systemwinkels und des vollkompensierten Richtungswinkels für jeden Sensor L und R separat werden im obigen Beispiel jeweils gleiche Ergebnisse bestimmt. Ist dies nicht der Fall, weist das auf eine unzutreffende Annahme oder eine unrichtige Entscheidung in einem vorhergehenden Schritt hin, beispielsweise eine Verteilung der Vorzeichen der halben Kreuzdejustagewinkel, welche die bestimmten Richtungswinkel nicht aneinander annähert sondern voneinander entfernt. Auf der Basis einer solchen Inkonsistenz können betroffene Entscheidungen bzw. Annahmen überprüft und evtl. korrigiert werden.

In einem Schritt 450 wird ein die Gültigkeit des Kompensationswinkels (und in der Folge auch der Objekthypothese α) anzeigendes Validitätssignal durch Auswerten des Filters 150 in Figur 1 bestimmt. Hierzu können die mit Bezug auf Figur 3 erläuterten Beobachtungen des Histogrammfilters 300 durchgeführt werden. Auch im Fall einer Inkonsistenz bei Berechnungen (siehe oben mit Bezug zur Tabelle) kann das Validitätssignal deaktiviert werden. Das Fahrerassistenzsystem 180 aus Figur 1 kann mittels des Validitätssignals deaktiviert werden, bis eine Kompensation des bzw. der Dejustagewinkel erfolgt ist.

Wie durch die Pfeile im Ablaufdiagramm 400 angedeutet ist, können einige der Schritte 405 - 450 unabhängig voneinander ausgeführt werden; insbesondere kann eine Durchführungshäufigkeit der Schritte unterschiedlich sein. Beispielsweise kann der Kreuzdejustagewinkel in Schritt 430 mit einer höheren Häufigkeit bestimmt werden als die Objekthypothese α in Schritt 425, um mit geringem Aufwand ein schnell ansprechendes Validitätssignal zur Deaktivierung des Fahrerassistenzsystems 180 in Figur 1 bereitzustellen.

## Patentansprüche

1. Verfahren zur Bestimmung eines Objektwinkels, insbesondere für ein Fahrerassistenzsystem (180) in einem Kraftfahrzeug (210), folgende Schritte umfassend:
- Bestimmen (405, 410) von Richtungswinkeln des Objekts bezüglich zweier Sensoren (L, R);
- Bestimmen (425) des Objektwinkels auf der Basis der Richtungswinkel;
- Bestimmen (430) eines Kreuzdejustagewinkels als Differenz der bestimmten Richtungswinkel;
- Bestimmen (450) eines die Gültigkeit des Objektwinkels anzeigenden Validitätssignals auf der Basis des Kreuzdejustagewinkels; und
- Kompensieren (415, 420) des Einflusses einer Dejustage der Sensoren (L, R) auf den bestimmten Objektwinkel auf der Basis des Kreuzdejustagewinkels.

2. Verfahren nach Anspruch 1, wobei die Sensoren (L, R) voneinander beabstandet sind und dass zur Bestimmung der Richtungswinkel die von den Sensoren (L, R) erfassten Richtungswinkel in ein gemeinsames Bezugssystem transponiert werden.

3. Verfahren nach Anspruch 1 oder 2, wobei das Validitätssignal mittels eines Histogrammfilters (300) bestimmt wird.

4. Verfahren nach Anspruch 3, wobei das Validitätssignal auf der Basis des am höchsten gefüllten Zählfachs des Histogrammfilters (300) oder einer Änderungsrate des durch den Histogrammfilter errechneten Kreuzdejustagewinkels oder der Varianz der Kreuzdejustagewinkel des Histogramms oder einer Änderungsrate des Füllstandes eines der Zählfächer (300) bestimmt wird.

5. Verfahren nach Anspruch 1 oder 2, wobei das Validitätssignal mittels eines Tiefpassfilters bestimmt wird.

6. Verfahren nach einem der Ansprüche 1 bis 5, **dadurch gekennzeichnet, dass** ein Systemwinkel auf der Basis von Objektwinkeln desselben Objekts an unterschiedlichen Positionen (230, 240) bestimmt wird. Dabei wurde zuvor die relative Dejustage des Objektes korrigiert. und dass der Systemwinkel zum Kompensieren des verbleibenden Systemwinkels der Sensoren (L, R) auf beide Richtungswinkel addiert wird.

7. Verfahren nach einem der Ansprüche 1 bis 5, **dadurch gekennzeichnet, dass** ein Kompensationswinkel auf der Basis von Objektwinkeln desselben Objekts an unterschiedlichen Positionen (230, 240) bestimmt wird und dass der Kompensationswinkel zum Kompensieren der relativen Dejustage der Sensoren (L, R) auf den Objektwinkel addiert wird.

8. Verfahren nach einem der Ansprüche 2 bis 7, wobei der Objektwinkel als Mittelwert zwischen den transponierten Richtungswinkeln bestimmt wird.

9. Vorrichtung (100) zur Bestimmung eines Objektwinkels, insbesondere für ein Fahrerassistenzsystem (180) in einem Kraftfahrzeug (230), umfassend:
- zwei Sensoren (L, R) zum Bestimmen von Richtungswinkeln des Objekts;
- Eine Verarbeitungseinrichtung (170) zum Bestimmen des Objektwinkels auf der Basis der bestimmten Richtungswinkel;
- eine Subtraktionseinrichtung (140) zum Bestimmen eines Kreuzdejustagewinkels aus den bestimmten Richtungswinkeln;
- einen Verifizierer (150) zum Bestimmen eines die Gültigkeit des Objektwinkels anzeigenden Validitätssignals auf der Basis des Kreuzdejustagewinkels; und
- einen Kompensator (170) zum Kompensieren des Einflusses einer Dejustage der Sensoren (L, R) auf den bestimmten Objektwinkel auf der Basis des Kreuzdejustagewinkels.

10. Vorrichtung (100) nach Anspruch 9, wobei die Sensoren (L, R) voneinander beabstandet sind, **gekennzeichnet durch** eine Transponiereinrichtung (120, 130) zum Transponieren von **durch** die Sensoren (L, R) erfasste Richtungswinkel in ein gemeinsames Bezugssystem;

11. Vorrichtung (100) nach Anspruch 9 oder 10, **dadurch gekennzeichnet, dass** der Verifizierer (150) ein Histogrammfilter (200) umfasst.
